# EUROPÄISCHE PATENTSCHRIFT

(11) **EP 0 777 308 B1**
(45) Veröffentlichungstag und Bekanntmachung des Hinweises auf die Patenterteilung: **03.03.1999**
(21) Anmeldenummer: 96117227.7
(22) Anmeldetag: 26.10.1996
(51) Int. Cl.: H02B 1/04, F16B 2/14

(54) **Vorrichtung zur Befestigung von Näherungsinitiatoren an Transportsystemen**
Device for mounting of proximity switches on transport systems
Dispositif de fixation des commutateurs de proximité sur des systèmes de transport

(30) Priorität: 01.12.1995 DE 19544868
(43) Veröffentlichungstag der Anmeldung: 04.06.1997
(73) Patentinhaber: GRUNDIG Aktiengesellschaft, 90762 Fürth (DE)
(72) Erfinder: Riegel,Jürgen,Dipl.-Ing.(FH), Grundig E.M.V., 90762 Fürth (DE)

(56) Entgegenhaltungen:
- DE-A- 4 041 090
- DE-C- 3 117 388
- US-A- 3 633 949

## Beschreibung

Die Erfindung betrifft eine Vorrichtung zur Befestigung von Näherungsinitiatoren an Profilleisten, bei Transportsystemen, nach dem Oberbegriff des Anspruches 1.

Näherungsinitiatoren werden insbesondere bei Transportsystemen eingesetzt, um die Position eines Werkstückträgers und damit eines Werkstückes auf einem Transportsystem zu erkennen. Die Näherungsinitiatoren werden an Initiatorhaltern angeordnet, die am Laufprofil des Transportsystems befestigt werden. Die Initiatorhalter bestehen in der Regel aus mechanisch belastbarem Material, vorzugsweise aus Kunststoff, und weisen eine Bohrung zum Durchführen eines Befestigungsmittels, meist einer Schraube, auf, mit der die Halter an dem Transportsystem befestigt werden.

Die Initiatorhalter weisen weiterhin eine zweite Bohrung auf, die zur Aufnahme der Näherungsinitiatoren vorgesehen sind. Diese Bohrungen haben eine genormte Länge und vor allem einen genormten Durchmesser, um die ebenfalls genormten Näherungsinitiatoren aufzunehmen.

Entsprechend der geforderten Abfragesignale werden vorgegebene Näherungsinitiatoren in die dafür vorgesehene Bohrung eingeführt. Im Initiatorhalter ist im Bereich der Bohrung eine federnde Zunge angeordnet, die mittels einer Schraube gegen den Näherungsinitiator gedrückt wird, wodurch der Näherungsinitiator arretiert wird.

Aus DE 41 41 162 ist eine Befestigungsklemme zur Anbringung von Näherungssensoren an Druckmittelzylinder bekannt. Die Befestigungsklemme weist ein am Sensor befestigbares Klemmstück auf.

Aus G 84 24 990.0 ist ein Näherungsschalter mit einem im wesentlichen prismatischem Gehäuse bekannt, wobei das Schaltergehäuse einen zapfenartigen Vorsprung aufweist, mittels dessen das Gehäuse mit einer Befestigungseinrichtung verbunden ist.

Aus G 87 08 099.0 ist ein anschraubbarer Halter für zylindrische Näherungsschalter bekannt. Dieser anschraubbare Halter weist einen zylindrischen Aufnahmeraum auf und besteht aus einem Sockel und einem Klemmglied.

Eine Vorrichtung gemäß dem Oberbegriff des Anspruchs 1 ist aus DE 31 17 388 C bekannt.

Der Nachteil der bekannten Halter für die Näherungsinitiätoren besteht darin, daß die Schraube zur Befestigung der Näherungsinitiators seitlich und damit schwer zugänglich angeordnet werden muß, um die federnde Zunge auf den Näherungsinitiator zu drücken.

Aufgabe der Erfindung ist es daher, eine Vorrichtung zur Befestigung von Näherungsinitiatoren anzugeben, bei der ein Wechsel der Initiatoren schnell und leicht durchgeführt werden kann.

Diese Aufgabe wird ausgehend von einer Vorrichtung mit den Merkmalen des Oberbegriffes des Anspruchs durch die kennzeichnenden Merkmale des Anspruchs gelöst.
Eine vorteilhafte Ausgestaltung der Erfindung ist im abhängigen Anspruch angegeben.

Gemäß der Erfindung wird parallel zu der Bohrung, welche den Näherungsinitiator aufnimmt, eine keilförmige, federnde Zunge angeordnet. Diese federnde Zunge, die durch einen Einsatz, der mittels einer Schraube verschiebbar ist und gegen den Näherungsinitiator gedrückt wird, arretiert den Näherungsinitiator. Die Schraube, welche das Verschieben des Einsatzes bewirkt, wird dabei parallel zum Näherungsinitiator, der stabförmig ausgebildet ist, angeordnet und ist von oben betätigbar.

Durch die Betätigung von oben ist die Schraube leicht zugänglich und somit der Wechsel des Näherungsinitiators einfach ausführbar. Insbesondere im Hinblick auf die Vielzahl der Näherungsinitiatoren, die an einem Transportsystem angeordnet sind, ergibt sich durch die erfindungsgemäße Vorrichtung ein erheblicher Zeitvorteil beim Wechsel der Näherungsinitiatoren.

Eine vorteilhafte Ausgestaltung der Erfindung sieht vor, dar der Einsatz, welcher die keilförmige Zunge gegen den Näherungsinitiator drückt, auf der der keilförmigen Zunge zugewandten Seite eine schiefe Ebene aufweist, die an die schiefe Ebene der keilförmigen Zunge angepaßt ist.

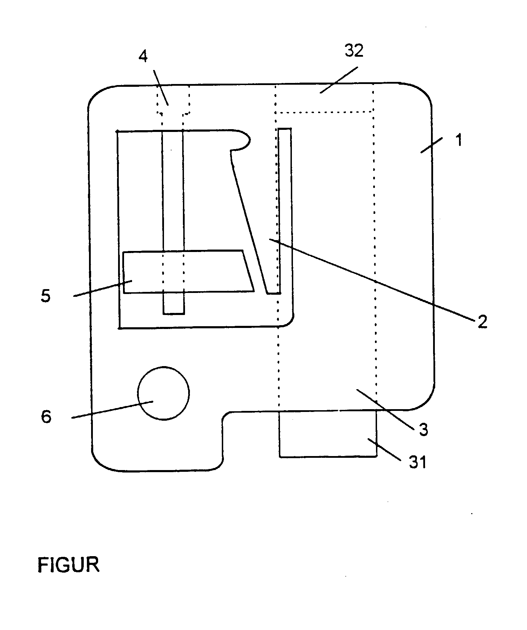

Im folgenden wird die Erfindung an Hand der Figur erläutert.

Die Figur zeigt einen Halter 1 zur Befestigung von Näherungsinitiatoren, der vorzugsweise aus Kunststoff besteht. Dieser Kunststoffhalter 1 weist eine Bohrung 6 auf, die zur Durchführung einer Schraube oder eines sonstigen Befestigungsmittels zur Befestigung des Halters an einem Transportsystem dient.

Der Kunststoffhalter 1 weist weiterhin eine Bohrung zur Aufnahme eines Näherungsinitiators 3 auf. Diese Bohrung ist senkrecht zur Bohrung 6 angeordnet und in der Weise ausgeführt, daß der Näherungsinitiator 3 senkrecht am Transportsystem angebracht werden kann. Die Abmessungen des Näherungsinitiators 3 sind genormt. Er weist ein Sensorteil 32, das oben angeordnet ist und ein Anschlußteil 31 auf, das im unteren Bereich liegt und zum Anschluß elektrischer Verbindungskabel dient.

Die Bohrung zur Aufnahme des Näherungsinitiators umfaßt auch einen Hohlraumbereich an dem sich eine parallel zur Bohrung angeordnete, federnde Zunge, die keilförmig ausgebildet ist, anschließt, wobei die schiefe Ebene des Keils auf der der Bohrung abgewandten Seite liegt. An dieser abgewandten Seite schließt sich ein Hohlraum an, in dem sich ein Einsatz 5 befindet, der von einer Schraube 4 gehalten wird. Der Einsatz 5 weist vorzugsweise ebenfalls eine schiefe Ebene auf, die durch Veränderung ihrer Lage in vertikaler Richtung auf die federnde Zunge einwirkt, so daß die federnde Zunge gegen den Näherungsinitiator gedrückt wird und ihn arretiert.
Die Veränderung der Lage des Einsatzes 5 wird durch Drehen der Schraube 4 bewirkt, wobei der Schraubenkopf oben angeordnet und somit für den Bediener leicht zugänglich ist.

## Patentansprüche

1. Vorrichtung zur Befestigung von Näherungsinitiatoren (1) an Profilleisten bei Transportsystemen, bestehend aus einem Kunststoffhalter (1), der eine Bohrung (6) zur Befestigung des Kunststoffhalters am Transportsystem mittels einer Schraube aufweist, und der eine zweite Bohrung zur Aufnahme des stabförmigen Näherungsinitiators (3) enthält, wobei
parallel zur zweiten Bohrung eine federnde Zunge (2) angeordnet ist, die mittels einer Schranke (4) aus der Ruhelage in der Weise auslenkbar ist, daß sie gegen den stabförmigen Näherungsinitiator (3) drückt **dadurch gekennzeichnet, daß** die Zunge (2) Keilförmig ausgebildet ist, und, durch einen Einsatz (5) auslenkbar ist, der mittels der Schraube (4) verschiebbar ist, wobei die Schraube (4) parallel zum Näherungsinitiator angeordnet und parallel in Richtung zur Einbaurichtung des Näherungsinitiators (3) betätigbar ist.

2. Vorrichtung nach Anspruch 1,
**dadurch gekennzeichnet, daß**
der Einsatz (5) auf der der keilförmigen Zunge zugewandten Seite eine schiefe Ebene aufweist, die der Keilform der federnden Zunge angepaßt ist.

## Claims

1. Device for mounting proximity pick-ups (1) on sectional rails in transport systems, consisting of a plastics holder (1) which comprises a bore (6) for mounting the plastics holder on the transport system by means of a screw and which contains a second bore for accommodating the rod-shaped proximity pick-up (3), wherein a resilient tongue (2) is disposed parallel to the second bore and can be deflected out of the rest position by means of a screw (4) such that it presses against the rod-shaped proximity pick-up (3), characterised in that the tongue (2) is wedge-shaped and can be deflected by an insert (5) displaceable by means of the screw (4), wherein the screw (4) is disposed parallel to the proximity pick-up and can be actuated in parallel in the direction in which the proximity pick-up (3) is fitted.

2. Device according to claim 1, characterised in that the insert (5) has an inclined plane, which is adapted to the wedge shape of the tongue, on the side which faces the wedge-shaped tongue.

## Revendications

1. Dispositif de fixation de commutateurs de proximité (3) sur des barrettes profilées dans des systèmes de transport, constitué par un dispositif de retenue en matière plastique (1), qui comporte un alésage (6) pour la fixation du dispositif de retenue en matière plastique sur le système de transport à l'aide d'une vis et comprend un second alésage servant à loger le commutateur de proximité (3) en forme de barre, dans lequel en parallèle avec le second alésage est disposée une languette élastique (2), que l'on peut faire dévier de la position de repos à l'aide d'une vis (4) de telle sorte qu'elle prend appui contre le commutateur de proximité (3) en forme de barre,
caractérisé en ce que
la languette (2) est agencée en forme de coin, et peut être déviée par un insert (5), qui peut coulisser à l'aide de la vis (4), la vis (4) étant disposée parallèlement au commutateur de proximité et pouvant être actionnée parallèlement dans la direction de montage du commutateur de proximité.

2. Dispositif selon la revendication 1,
caractérisé en ce que
l'insert (5) présente, du côté tourné vers la languette en forme de coin, un plan oblique, qui est adapté à la forme de coin de la languette élastique.
